Europäisches Patentamt

(19) European Patent Office

Office européen des brevets

(11) Numéro de publication: **0 141 766**
**B1**

(12) **FASCICULE DE BREVET EUROPEEN**

(51) Int. Cl.⁴: **B 63 H 9/10,** F 16 B 45/02

(45) Date de publication du fascicule du brevet:
**03.06.87**

(21) Numéro de dépôt: **84420182.2**

(22) Date de dépôt: **25.10.84**

(54) Dispositif de sécurité pour l'accrochage du point de drisse d'une voîle en tête d'un mât.

(30) Priorité: **28.10.83 FR 8317508**

(43) Date de publication de la demande:
**15.05.85 Bulletin 85/20**

(45) Mention de la délivrance du brevet:
**03.06.87 Bulletin 87/23**

(84) Etats contractants désignés:
**DE GB IT NL SE**

(56) Documents cités:
**FR - A - 1 596 812**
**GB - A - 1 474 910**
**GB - A - 2 047 382**
**US - A - 3 343 514**

(73) Titulaire: **LEISYSTEM, Société Anonyme :, 24, avenue J.**
**Masset B. P. 9132, F-69263 Lyon Cédex 1 (FR)**

(72) Inventeur: **Bernard, Bernard, 38, Quai Gillet,**
**F-69004 Lyon (FR)**

(74) Mandataire: **Ropital-Bonvarlet, Claude et al, Cabinet**
**BEAU DE LOMENIE 99, Grande rue de la Guillotière,**
**F-69007 Lyon (FR)**

ACTORUM AG

## Description

La présente invention concerne le domaine technique de l'établissement des voiles d'un bateau et elle vise, plus particulièrement, les moyens techniques mis en oeuvre pour accrocher ou suspendre le point de drisse d'une voile quelconque en tête du mât porteur.

L'objet de l'invention vise, indifféremment, l'établissement des grand'voiles ou des focs.

Pour hisser une grand'voile, on engage, le plus souvent, un cordon de ralingue ou analogue dans un tunnel de ralingue du mât et on hisse une telle voile par l'intermédiaire d'une drisse accrochée au point de drisse de la voile et passant sur un réa de renvoi situé en tête du mât.

Lorsqu'une telle grand'voile est établie, la drisse sous tension exerce sur l'axe du réa un effort de compression, pratiquement double de celui d'étarquage.

De tels moyens techniques ne donnent pas entière satisfaction, car les drisses sont soumises à une contrainte de tension permanente, provoquant leur usure rapide dans la partie coopérant en permanence avec le réa de tête de mât.

En outre, lorsqu'il convient de réduire, voire d'affaler rapidement une telle grand'voile, il est impératif que la drisse puisse passer, coulisser ou filer librement sur le réa, sans que ce dernier ne représente un obstacle ou que la drisse, par elle-même, s'enroule et se bloque en tête de mât.

Si l'une ou l'autre de ces éventualités se produit, la voile ne peut être abaissée que par l'intervention d'un équipier grimpant dans la mâture.

Un problème de même ordre se rencontre pour la manoeuvre des focs établis au moyen d'une gaine d'étai à gorges et assurés par un coulisseau circulant le long de la gaine tournante ou non. Un tel coulisseau est chargé de coopérer avec un crochet placé en tête de la gaine pour retenir le coulisseau en position haute correspondant à l'établissement du foc.

Ces moyens peuvent être prévus, indifféremment, pour une gaine capable d'assurer l'enroulement éventuel du foc, en vue de réduire la surface offerte au vent.

Avec de tels moyens, on conçoit que la possibilité d'amener un foc pour son changement, par exemple, dépend essentiellement, d'une part, de la possibilité de commander à distance l'ouverture du crochet de têtière de la gaine et, d'autre part, du coulissement libre descendant du coulisseau portant le point de drisse. En pratique, il est fréquent de constater que le libre coulissement du coulisseau est entravé coincement de la drisse de hissage ou, encore, par une déformation locale de la gaine ou de l'un des éléments constitutifs de cette dernière trop sollicité en charge lors d'une manoeuvre ultérieure.

Si l'obligation d'amener le foc se présente par gros temps, les obstacles ci-dessus peuvent avoir alors des conséquences graves, voire catastrophiques.

La demande anglaise GB-A-2 047 382 a pour objet un mousqueton utilisable pour les voiles de bateau. Un tel mousqueton est à ouverture commandée sous charge et comporte une gâchette de libération d'une branche mobile courbe montée sur une chape formée par une branche fixe. La gâchette est rappelée élastiquement en position d'immobilisation de la branche mobile et peut être commandée en ouverture à distance par un câble. Le corps du mousqueton possède un émerillon tournant sur un axe.

Un tel dispositif n'est pas totalement satisfaisant pour régler le problème posé car il ne fournit pas de sécurité positive pour éviter une ouverture intempestive du mousqueton.

La présente invention vise à apporter une solution au problème ci-dessus en proposant un nouveau dispositif de sécurité pour l'accrochage du point de drisse d'une voile quelconque en haut d'un mât supportant une telle voile.

Un objet de l'invention est de proposer un dispositif permettant de décrocher rapidement, en cas de besoin, le point de drisse de la voile par une simple intervention manuelle, ne nécessitant aucune dépense physique ou manoeuvre acrobatique.

Un autre objet de l'invention est de proposer un dispositif de sécurité présentant, en outre, l'avantage, dans un de ses développements, de simplifier les moyens techniques mis en oeuvre pour assurer, dans un premier temps, la fonction d'accrochage du point de drisse en tête du mât.

Un autre objet encore de l'invention est de proposer un dispositif de sécurité qui puisse être aisément adapté aux moyens actuels de hissage des voiles qu'elles soient, indifféremment, grand'voile ou foc.

Un autre objet encore de l'invention est de proposer un dispositif de sécurité qui présente l'avantage de réduire, sensiblement, le poids des moyens techniques placés en tête de mât lorsque la voile est établie et conférant ainsi une meilleure stabilité au bateau, tout en réduisant la fatigue supportée par la structure du mât.

Pour atteindre les buts ci-dessus, l'objet de l'invention, du type comprenant un mousqueton à ouverture commandée sous charge possédant une gâchette de déclenchement d'ouverture à rappel élastique et un émerillon d'attache au point de drisse de la voile (GB-A-2 047 382), est caractérisé en ce qu'il comprend:

— un organe de commande à distance du déclenchement de la gâchette, monté coulissant le long de la voile,

— un organe de préhension fixé en bout de l'organe de commande et disposé, en période de non-utilisation, à l'intérieur d'une poche protectrice formée sur la voile.

La description faite ci-dessous en référence aux dessins annexés montre, à titre d'exemples non limitatifs, des formes de réalisation de l'objet de l'invention.

La fig. 1 est une élévation partielle, illustrant schématiquement, à titre d'exemple, un foc de voilier comprenant un dispositif selon l'invention.

La fig. 1a est une coupe transversale, prise à plus grande échelle, selon la ligne Ia de la fig. 1.

La fig. 2 est une élévation latérale, à plus grande échelle, correspondant à la fig. 1 et montrant, plus précisément, les moyens techniques selon l'invention.

La fig. 3 est une coupe partielle prise, à plus grande échelle, sensiblement selon la ligne III-III de la fig. 2.

La fig. 4 est une coupe transversale prise selon la ligne IV-IV de la fig. 2.

La fig. 5 est une coupe, analogue à la fig. 4, mais prise, à échelle différente, selon la ligne V-V de la fig. 1.

La fig. 6 est une élévation partielle, analogue à la fig. 2, mais illustrant un développement de l'invention.

La fig. 7 est une vue transversale partielle prise, à plus grande échelle, selon la ligne VII-VII de la fig. 6.

La fig. 8 est une coupe transversale partielle prise, à plus grande échelle, selon la ligne VIII-VIII de la fig. 6.

La fig. 9 est une coupe-élévation montrant, à plus grande échelle, un développement de la forme de réalisation selon la fig. 6.

Les fig. 10 et 11 sont deux perspectives parties en coupe illustrant deux développements de l'un des éléments constitutifs de l'invention.

La fig. 12 est une coupe tranversale illustrant un autre développement de l'un des éléments constitutifs de l'objet de l'invention.

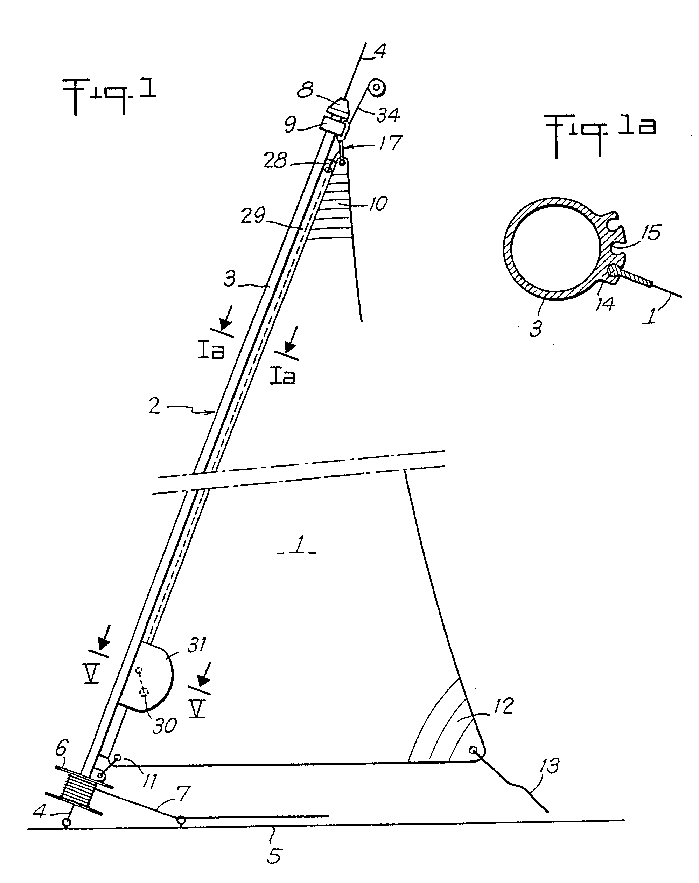

La fig. 1 illustre un foc 1 d'un voilier, monté sur un enrouleur 2 comprenant une gaine ou un mandrin 3 formé de segments ou d'éléments constitutifs emboîtés. Ces éléments sont maintenus et centrés par des coussinets, de conception connue, sur un étai 4 établi entre le point 5 d'un bateau et la tête d'un mât non représenté.

La base de l'enrouleur 2 comporte un tambour 6 associé à un câble de manoeuvre 7, de préférence du type sans fin. L'enrouleur 2 comporte une têtière 8 constituant une butée d'accrochage pour un coulisseau 9 libre de coulisser sur le mandrin 3. Le coulisseau 9 est relié au point de drisse 10 du foc 1 dont le point d'amure 11 est retenu sur le tambour 6, alors que le point d'écoute 12 peut être relié à un tambour ou treuil par une écoute 13.

De tels focs sont, en général, montés sur le mandrin 3 par un cordon de ralingue 14, qu'ils comportent engagé dans un tunnel ou gorge de ralingue 15 présenté par le mandrin 3. Il est fréquent que de tels mandrins comportent plus d'un tunnel 15 et, en général, deux à trois.

L'exemple d'application donné ci-dessus n'a aucun caractère limitatif, car l'objet de l'invention, tel que décrit ci-après, peut s'appliquer également à toute voile, même grand'voile, établie par des moyens autres sur un mât ou analogue destiné à la supporter.

L'objet de l'invention est de mettre en oeuvre un dispositif de sécurité pour l'accrochage du point de drisse d'une voile, par exemple le foc 1, en tête d'un mât ou analogue, par exemple, le mandrin 3.

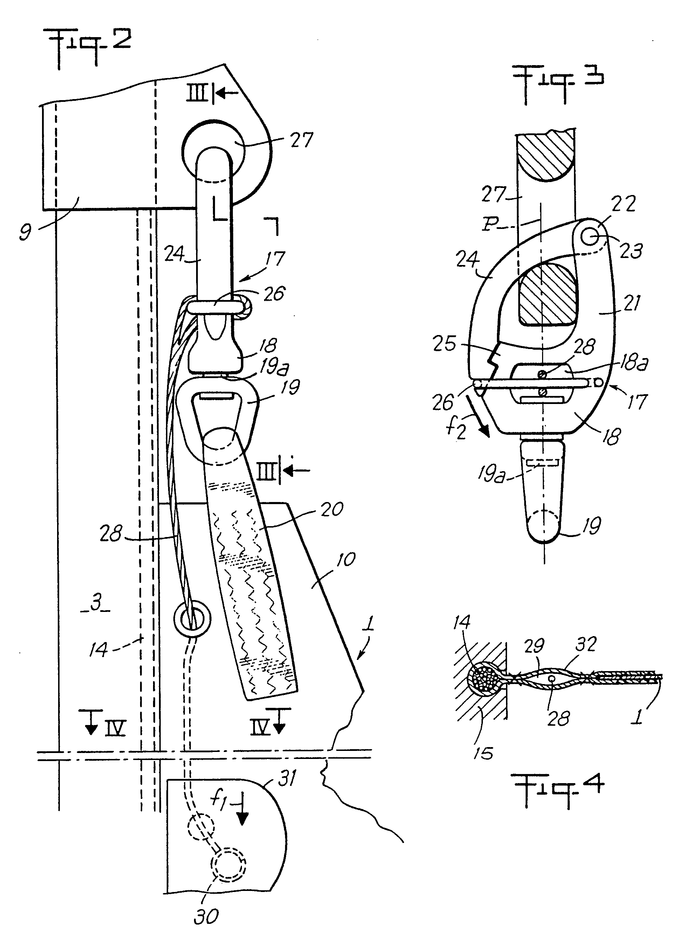

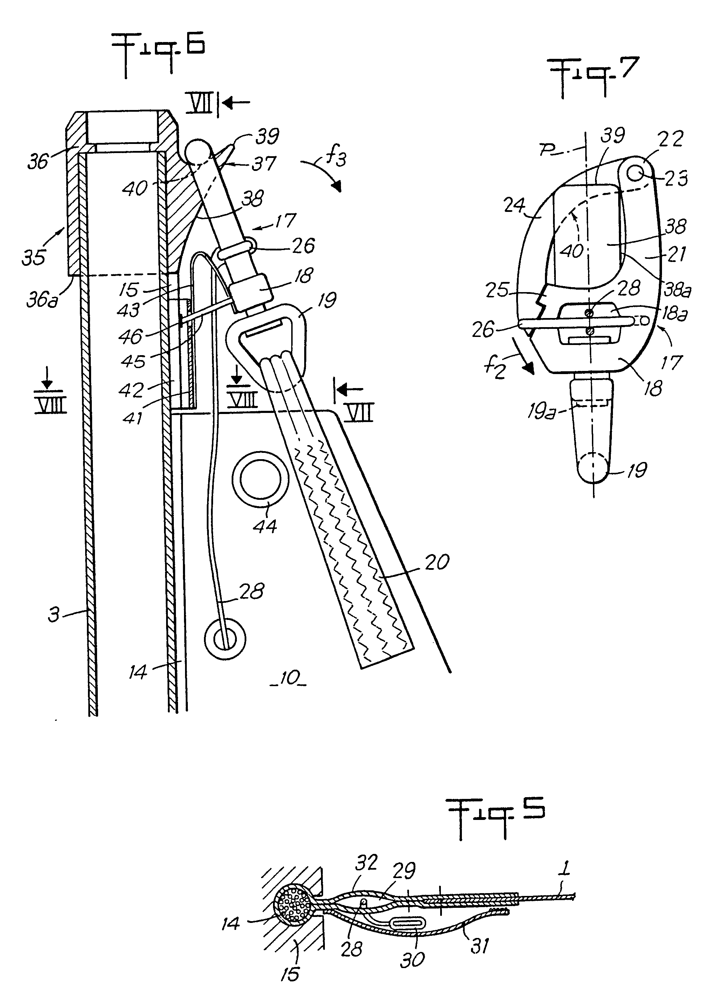

Selon l'exemple illustré par la fig. 2, le dispositif de l'invention fait intervenir un mousqueton 17, du type à ouverture commandée sous charge, dont le corps 18 (fig. 3) est prolongé à sa base par un émerillon 19 accroché, par tout moyen convenable, au point de drisse 10. Dans l'exemple représenté, l'émerillon 19 est relié au point de drisse par une sangle 20 qui pourrait, éventuellement, être remplacée par une manille passée à travers un oeillet ménagé dans le point de drisse 10.

Le corps 18 du mousqueton 17 est prolongé, à l'opposé de l'émerillon 19, par une branche fixe 21 formant en bout une chape 22 qui est, de préférence, déportée latéralement par rapport à l'axe longitudinal P du mousqueton, passant par le tourillon 19a de l'émerillon 19. La chape 22 supporte, par un axe d'articulation 23, une branche mobile 24 qui est, de préférence, courbée en direction du corps 18. La partie terminale libre de la branche mobile 24 est conformée de façon complémentaire à une saillie d'accrochage 25 formée par le corps 18.

La branche mobile 24 est destinée, également, à coopérer avec une gâchette 26 de déclenchement à l'ouverture. Cette gâchette 26 est, par exemple, constituée par un ressort en épingle monté, par deux extrémités recourbées et décalées de ses branches parallèles, sur le corps 18 pour occuper, par un tel montage, une position stable, perpendiculaire à l'axe P. Le plan occupé dans la position de repos par la gâchette 26 est choisi pour que le segment de liaison des deux branches du ressort entourent et retiennent la partie terminale de la branche mobile 24 maintenue ainsi en état de coopération avec la saillie d'accrochage 25. Le plan de la gâchette 26 est aussi choisi pour être sensiblement médian par rapport à une fenêtre 18a présentée par le corps 18.

Le montage du mousqueton s'effectue, après ouverture de la branche 24, en engageant cette dernière dans un oeilleton 27 présenté à cet effet par le coulisseau 9, puis en repliant la branche 24, de manière à reconstituer le mousqueton par l'intermédiaire de la gâchette 26.

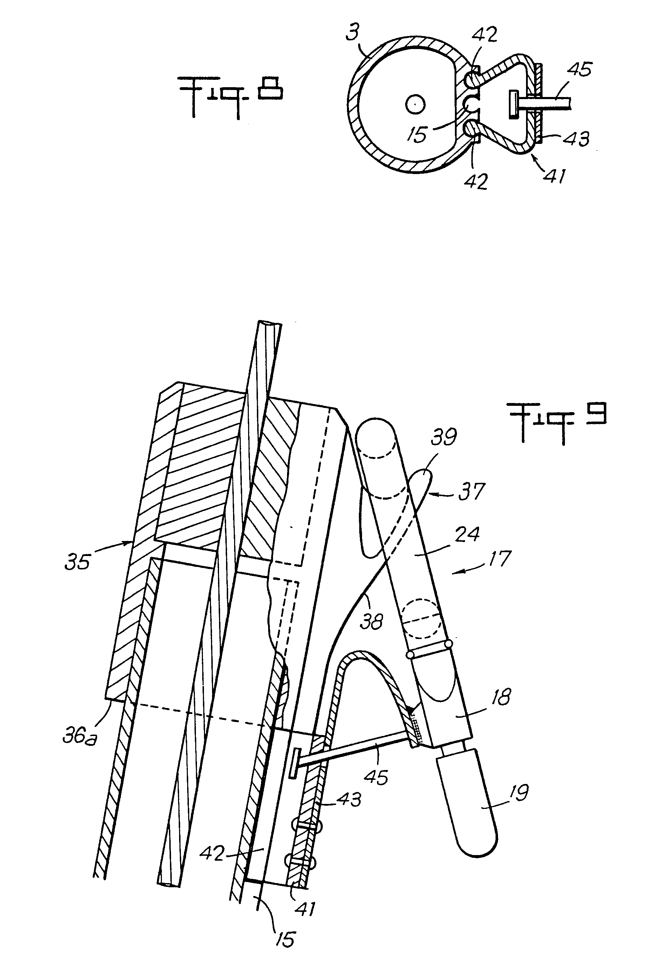

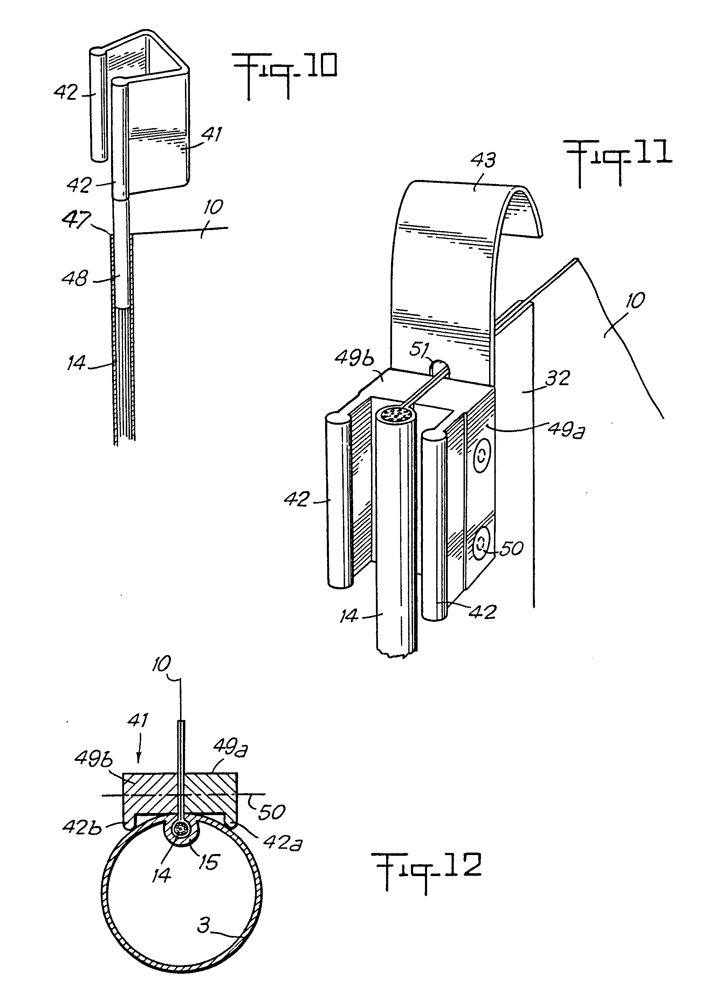

Le mousqueton décrit ci-dessus est associé à une commande à distance 28 du déclenchement de la gâchette 26. Cette commande 28 est constituée par un câble ou un cordon présentant, de préférence, peu ou pas de possibilité d'extension sous un effort de traction. Le câble ou cordon 28 est accroché à la gâchette 26, notamment par passage à travers la fenêtre 18a, et s'étend, ensuite, parallèlement à la voile 1 qui le porte. De préférence, le câble ou cordon 28 est monté libre de coulisser dans une gaine 29 qui est ménagée sur l'une des faces de la voile 1, très légèrement en retrait du cordon de ralingue 14. Le câble ou cordon 28 s'étend ainsi sur la majeure partie du guindant et se termine à sa partie terminale inférieure par un organe de préhension 30 accessible librement à l'extérieur de la gaine 29. Les fig. 1, 2 et 5 montrent que l'organe de préhension 30 est, de préférence, constitué par un anneau qui est normalement protégé et maintenu à l'intérieur d'une poche formée, par exemple, par un rabat 31 pouvant être maintenu plaqué sur la face correspondante de la voile 1 par tout moyen d'accrochage rapide.

La fig. 4 montre un exemple de réalisation selon lequel la gaine 29 est formée directement par le ruban 32 de ralingue 14 équipant le guindant de la voile 1. La gaine 29 pourrait aussi être formée par une ganse rapportée, par tout moyen convenable, sur le ruban 32.

Une voile, tel que le foc 1, équipée du dispositif décrit ci-dessus, peut être hissée ou amenée par les moyens classiques, tels que la drisse 34 schématisée à la fig. 1. Toutefois, dans le cas où une manoeuvre rapide doit intervenir pour amener le foc 1, en cas de conditions de navigation difficiles ou de blocage de la drisse 34 ou du coulisseau 9, notamment, l'équipier chargé de la manoeuvre ouvre la poche 31 se présentant à sa proximité pour accéder à l'organe de préhension 30. Une telle manoeuvre peut être exécutée rapidement, quelles que soient les conditions de navigation, étant donné que le rabat 31 peut être ouvert par simple traction, sans faire intervenir un outil quelconque.

L'équipier saisit alors l'organe de préhension 30 et exerce sur ce dernier une traction dans le sens de la flèche $f_1$ (fig. 2) pour commander à distance le déclenchement en ouverture de la gâchette 26 sollicitée en abaissement ou pivotement vers le bas dans le sens de la flèche $f_2$ selon la fig. 1. Ceci a pour effet de libérer la branche 24 qui est sollicitée en pivotement d'ouverture sur l'axe 23 par la tension préalablement appliquée à la ralingue de guindant. L'ouverture de la branche 24 peut s'effectuer sans entrave, compte tenu de la position déportée de la chape 22 qui autorise, après ouverture, un dégagement automatique de la branche 24 par rapport à l'oeilleton 27. Il en résulte une désolidarisation ou un décrochage spontané, libérant totalement le point de drisse 10 des moyens techniques mis en oeuvre pour assurer son accrochage en tête de mât.

Ainsi, sans effort important, l'équipier peut obtenir la libération du point de drisse, quelles que soient les conditions de navigation et/ou les blocages intervenant en tête de mât et affaler ainsi, dans un laps de temps très court, l'ensemble de la voile ou du foc 1 pour, soit récupérer une telle voile dans son intégrité, soit parer immédiatement à des conditions de navigation particulièrement difficiles.

Selon un développement de l'invention, illustré par les fig. 6 et 7, le dispositif de sécurité est mis en oeuvre pour assurer directement l'accrochage de la voile 1 en tête du mât 3 alors équipé d'une têtière 35 adaptée à cette fin. Selon ce développement, la têtière 35 est constituée par un embout, un chapeau ou un manchon 36 coiffant l'extrémité haut du mât. L'embout 36 forme, à partir de sa surface extérieure, un ergot 37 s'étendant axialement en faisant saillie dans la même direction générale que celle d'ouverture des tunnels de ralingue 15. L'ergot 37 forme une rampe inclinée 38 reliant de la base 36a à un sommet 39 raccordé par une gorge 40 à la paroi périphérique de l'embut 36. La gorge 40 est étudiée de façon à offrir une surface d'appui complémentaire pour la face interne de la branche 24 du mousqueton affectant une conformation du type de celle illustrée et décrite en référence à la fig. 3.

Dans ce développement, le dispositif conforme à l'invention comprend, par ailleurs, un chariot ou patin de guidage 41 qui est conformé de manière à être monté et guidé par au moins un segment cylyindrique 42 dans au moins une gorge ou tunnel 15 du mât 3. De préférence, comme illustré par la fig. 10, le chariot 41 comporte deux segments cylindriques 42 qui sont engagés simultanément pour coulisser dans les tunnels 15.

Il doit être compris qu'une conformation différente pourrait être retenue pour assurer le guidage en coulissement du chariot ou patin 41. Par exemple, le segment cylindrique 42 pourrait être remplacé par une griffe, un collier ouvert ou une glissière coopérant avec une nervure présentée par le mât.

Le chariot ou patin 41 est relié au corps 18 du mousqueton 17 par un organe de liaison 43 déformable élastiquement. Cet organe de liaison 43 est constitué par un ressort-lame replié pour comporter deux branches, l'une étant solidarisée, de toute façon convenable, du corps 18 et l'autre étant fixée, de manière appropriée, sur le chariot ou patin 41.

Le ressort-lame 43 est disposé pour que son plan soit perpendiculaire à celui de la voile 1, de manière à constituer un organe de support assurant la stabilité et le maintien du mousqueton 17, de telle sorte que son plan soit aussi, également, perpendiculaire à celui de la voile 1. En outre, le ressort-lame 43 est conformé de manière que la petite branche, solidaire du corps 18, assure le maintien du mousqueton 17 et, plus particulièrement, du plan de ce dernier, selon une orientation inclinée en direction de la têtière 35.

Le dispositif, ainsi constitué, permet de hisser et d'accrocher automatiquement la voile 1 sans avoir recours aux moyens habituellement mis en oeuvre à cette fin.

En effet, la voile 1 est hissée par des moyens habituels, tels qu'une drisse, pour être élevée par coulissement du cordon de ralingue 14 dans le tunnel central 15. Au cours de cette élévation, le point de drisse 10 est maintenu sous traction et le mousqueton 17 occupe une position stable, sans contact avec le mât 3, en étant maintenu par l'organe de liaison 43 dont le guidage est assuré par l'intermédiaire du patin ou du chariot 41 coulissant dans au moins un tunnel 15.

Lorsque la branche mobile 24 prend contact avec la rampe 38, le mousqueton 17 bascule dans le sens de la flèche $f_3$ (fig. 6) en contraignant le ressort-lame 43.

Sous l'action de traction de la drisse de hissage un tel basculement se poursuit tant que la branche mobile 24 gravit la rampe 38. Il y a lieu de noter, par référence à la fig. 7, que ce déplacement s'effectue selon un trajectoire guidée. En effet, la chape 22, déportée latéralement, vient alors coopérer avec l'arête 38a de la rampe 38 et assure, de la sorte, le maintien automatiquement guidé dans le plan transversal du mousqueton 17 jusqu'au moment où la branche mobile 24 gravit le sommet 39. A cet instant, l'organe élastique 43 restitue le travail emmagasiné et provoque le basculement du mousqueton 17 dans le sens inverse à celui de la flèche $f_3$ et l'engagement automatique de la branche mobile 24 dans la gorge ou l'encoche 40 de l'ergot 37.

Dans cet état, le guindant de voile peut être étarqué pour affermir l'accrochage du mousqueton 17 avec l'ergot 37 qui est établi solidement, de façon automatique, par le propre poids de la voile 1.

Si besoin est, la drisse de hissage peut être décrochée et ramenée dans sa position initiale par l'intermédiaire d'un cordon de rappel usuel après étarquage du guindant de voile.

Dans la mesure où il convient d'amener rapidement la voile 1 et, par conséquent, de provoquer le décrochage du point de drisse 10 par rapport à la tête du mât 3, que la voile soit ou non toujours en liaison avec la drisse de hissage, l'équipier chargé de cette manoeuvre agit, comme dit précédemment, sur l'organe de préhension 30 pour commander le déclenchement en ouverture de la gâchette 26 qui libère l'ouverture de la branche mobile 24.

Le mousqueton 17 sous charge s'ouvre alors spontanément, ce qui produit l'échappement de la branche 24 par rapport à l'ergot 37.

Dans ce développement du dispositif de l'invention, il y a lieu de noter que l'étarquage entre la voile et la tête de mât s'effectue directement, par l'intermédiaire du mousqueton 17 et de l'ergot 37 et permet, par conséquent, de soulager totalement les drisses, généralement utilisées à cette fin sur les constructions classiques. Ceci permet de supprimer les moyens habituels, tels que les coulisseaux ou réas de renvoi et, par conséquent, de réduire la charge statique et dynamique imposée au mât, tel que 3, que ce dernier soit du type enrouleur de foc ou mât principal de grand'voile.

Lorsque la voile a été complètement amenée, il suffit de renfermer le mousqueton 17 pour que le dispositif soit de nouveau utilisable pour l'accrochage de la voile en tête d'un mât.

Selon un développement de l'invention, le point de drisse 10 est muni d'un moyen 44 d'accrochage du crochet de drisse de hissage. Un tel moyen 44 peut être constitué par un oeillet ou, encore, par un passant formé par une ganse rapportée par couture sur le point de drisse 10. De cette manière, le hissage de la voile s'effectue par traction, directement sur le point de drisse, et permet de maintenir le mousqueton 17 dans le plan qui lui est conféré par l'organe 43 déformable élastiquement, en vue de faciliter le contact entre la branche 24 et la rampe 38, ainsi que le basculement dans le sens de la flèche $f_3$.

Un tel moyen de hissage permet, également, de supprimer toute sollicitation en ouverture maximale du ressort-lame 43 qui peut, d'ailleurs, comporter, dans le même but, une butée 45 limitant l'ouverture des branches le constituant. Cette butée 45 peut être constituée par une tige solidaire du corps 18 et traversant la branche et/ou le chariot 41 au-delà duquel elle forme une tête de butée 46.

La fig. 9 montre qu'il peut être avantageux de conformer le chariot ou patin 41 et/ou la têtière 35, de manière à rendre possible une butée positive du chariot ou patin contre le rebord 36a inférieur de la têtière 35. Ceci détermine la course maximale de hissage de la voile et représente une information transmise à distance aux équipiers chargés de la manoeuvre. En effet, l'opposition ainsi perçue dans la poursuite de la manoeuvre de hissage assure les équipiers de l'engagement automatique de la branche 24 dans la gorge 40.

La fig. 10 montre qu'il peut être avantageux, également, de prévoir une liaison entre le patin ou chariot 41 et le bord supérieur 47 du point de drisse 10 de la voile, afin de supprimer toute tendance au déchirement qui pourrait, éventuellement, résulter d'une action de traction exercée par la drisse de hissage, alors que le patin ou chariot 41 est en position de butée positive contre le bord périphérique 36a. Selon cette figure, le cordon de ralingue 14 est interrompu en retrait du bord 47 et le ruban 32 contient, alors, une tige métallique 48, fortement serrée et/ou solidarisée par tout autre moyen convenable. La tige 48 fait saillie au-delà du bord 47, de manière à pouvoir prendre appui contre l'un des segments cylindriques 42 du patin ou chariot 41 conformé alors pour que le segment cylindrique concerné soit engagé dans le tunnel 15 recevant le cordon de ralingue 14.

La fig. 11 montre une variante de réalisation selon laquelle le chariot ou patin 41 est monté directement sur le point de drisse 10 de la voile 1, de manière à faire partie de cette dernière. Selon un exemple de réalisation, dans un tel cas, le chariot ou patin 41 peut être constitué par deux pièces complémentaires 49a et 49b rendues solidaires par des fixations 50, telles que des rivets ou des vis, etc., traversant, à la fois, les deux parties complémentaires, ainsi que la voile 1. Dans un tel cas, le chariot 41 est monté sur la partie du ruban de ralingue jouxtant le cordon 14, de manière à pouvoir être placé le plus près du mât et coopérer avec la têtière 35 en butée positive. Dans un tel cas, l'une et/ou l'autre partie complémentaire 49a et 49b peut former un segment cylindrique 42, apte à coopérer alors avec un tunnel de ralingue latéral 15, afin, d'assurer le guidage transversal du chariot 41.

L'organe de liaison 43 peut être constitué, comme dit précédemment, en prévoyant, par exemple, de ménager dans la grande branche, une fente axiale 51 permettant d'enfiler un tel organe 43 sur le point de drisse 10, pour assurer la solidarisation du ressort-lame 43 sur les deux parties complémentaires 49a et 49b.

La fig. 12 montre un développement selon lequel le chariot ou patin 41, tel que décrit ci-dessus, comporte des prolongements 42a et 42b destinés à coopérer par appui avec la surface périphérique du mât lorsque ce dernier ne comporte, par exemple, qu'un seul tunnel de ralingue 15 pour le coulissement de la ralingue 14 d'une voile 1.

Parmi les avantages de l'invention, il y a lieu de mentionner que le dispositif d'accrochage est d'un coût faible, tout en étant tès fiable, étant donné que le mousqueton 17 travaille toujours dans les conditions normales pour lesquelles il est mécaniquement conçu.

Par ailleurs, le dispositif de l'invention peut être manoeuvré rapidement, sans recherche ni connaissance particulière et offre, ainsi, une sécurité d'utilisation importante dans les cas où il convient d'amener ou d'affaler rapidement une voile en cas de danger ou de conditions de navigation difficiles. De plus, dans le cas d'utilisation selon le développement consistant à faire assumer au dispositif une fonction d'accrochage ou de suspension du point de drisse d'une voile, l'objet de l'invention permet de faciliter la construction d'un mât en supprimant les organes coulissants, habituellement mis en oeuvre à cette fin, notamment pour ce qui concerne les enrouleurs de foc.

## Revendications

1. Dispositif de sécurité pour l'accrochage du point de drisse d'une voile en tête d'un mât, du type comprenant un mousqueton (17) à ouverture commandée sous charge, possédant une gâchette (26) de déclenchement d'ouverture à rappel élastique et un émerillon (19) d'attache au point de drisse (10) de la voile (1), caractérisé en ce qu'il comprend:

— un organe (28) de commande à distance du déclenchement de la gâchette, monté coulissant le long de la voile (1),

— un organe de préhension (30) fixé en bout de l'organe de commande et disposé, en période de non-utilisation, à l'intérieur d'une poche protectrice (31) formée sur la voile.

2. Dispositif selon la revendication 1, caractérisé en ce que l'organe de commande (28) est un câble ou cordon coulissant dans une gaine (29) que comporte la voile (1) sensiblement parallèlement au cordon de ralingue.

3. Dispositif selon la revendication 1, caractérisé en ce qu'il comprend un mousqueton (17) comportant, d'une part, une branche fixe (21) dont l'extrémité forme une chape (22) déportée par rapport à l'axe longitudinal (P) du mousqueton passant par le tourillon (19a) de l'émerillon (19) et, d'autre part, une branche mobile (24) courbe, articulée sur la chape et dont la partie terminale libre, destinée à coopérer avec une saillie d'accrochage (25), est complémentaire à la gâchette (26) de déclenchement spontané en ouverture sous charge.

4. Dispositif selon la revendication 1 ou 3, caractérisé en ce qu'il comprend un mousqueton (17) interposé entre le point de drisse (10) de la voile (1) et un coulisseau (9) enfilé sur le mât ou analogue et destiné à coopérer avec un crochet placé en tête de mât.

5. Dispositif selon la revendication 1 ou 3, caractérisé en ce qu'il comprend:

— un mousqueton (17) attaché sur le point de drisse (10) de la voile (1),

— un chariot ou patin (41) de guidage coulissant coopérant avec au moins un tunnel de ralingue (15) du mât,

— un organe de liaison (43) déformable élastiquement interposé entre le chariot et le mousqueton et assurant le maintien dudit mousqueton pour que son plan soit placé perpendiculairement au plan de la voile en étant incliné en direction de la tête (35) de mât,

— un ergot d'accrochage (37) complémentaire au mousqueton et prévu en tête de mât.

6. Dispositif selon la revendication 5, caractérisé en ce qu'il comprend un moyen (44) rapporté en point de drisse (10) de la voile (1) pour l'engagement d'un crochet de hissage monté en bout d'une drisse et associé à un cordon de rappel.

7. Dispositif selon la revendication 5, caractérisé en ce que l'organe déformable (43) est un ressort-lame replié dont le plan est perpendiculaire au plan de la voile.

8. Dispositif selon la revendication 5 ou 7, caractérisé en ce que l'organe de liaison (43) déformable élastiquement est associé à des moyens (45, 46) limitant sa déformation.

9. Dispositif selon la revendication 5, caractérisé en ce que le chariot (41) présente une longueur choisie pour coopérer en butée positive contre la têtière (35) et limiter la course de hissage de la voile.

10. Dispositif selon la revendication 5, caractérisé en ce que le chariot (41) est relié au cordon de ralingue de la voile pour coopérer avec ce dernier lorsqu'il est en butée contre l'ergot d'accrochage.

11. Dispositif selon la revendication 5 ou 9, caractérisé en ce que le chariot (41) est porté par la voile.

12. Dispositif selon la revendication 5, caractérisé en ce que l'ergot d'accrochage (37) forme depuis sa base une rampe inclinée (38) de guidage latéral de la chape (22) de la branche fixe (21) du mousqueton et de basculement en ouverture du plan dudit mousqueton contre l'action de l'organe de liaison déformable élastiquement.

**Patentansprüche**

1. Sicherungseinrichtung zum Einhaken des Segelkopfes an der Mastspitze mit einem Karabinerhaken (17), dessen Öffnung unter Last erfolgt mit einem elastisch zurückfedernden Clip (26) zum Auslösen der Öffnung und einem Kettenwirbel (19) zur Anbringung an der Segelspitze (10, 1), gekennzeichnet durch

— ein aus der Ferne betätigbares Steuerorgan (28) zum Auslösen des Clips, wobei das Organ entlang des Segels (1) verschiebbar angeordnet ist, und

— ein Greiforgan (30), das an der Spitze des Steuerorgans befestigt und während seiner Nichtverwendung im Inneren einer Schutztasche (31) angeordnet ist.

2. Vorrichtung nach Anspruch 1, dadurch gekennzeichnet, dass das Steuerorgan (28) ein Kabel oder Seil ist, das in einer Schutzhülle (29) gleitet, die das Segel (1) parallel zum Liekband aufweist.

3. Vorrichtung nach Anspruch 1, dadurch gekennzeichnet, dass sie einen Karabiner (17) aufweist, einerseits mit einem festen Flügel (21) dessen Ende eine Gabel (22) bildet, die gegenüber der Längsachse (P) des Karabinerhakens versetzt ist, die durch die Drehachse (19, 19a) des Kettenwirbels (19) verläuft und andererseits mit einem beweglichen gebogenen Flügel (24), der an der Gabel angelenkt ist und dessen freies Endstück dazu bestimmt ist, mit einem Verriegelungsvorsprung (25) zusammenzuwirken und das komplementär zu dem Clip (26) geformt ist, der zur spontanen Auslösung der Öffnung des Karabiners unter Last bestimmt ist.

4. Vorrichtung nach Anspruch 1 oder 3, dadurch gekennzeichnet, dass sie einen Karabinerhaken (17) aufweist, der zwischen der Segelspitze (10, 1) und einem Gleitring (9) angeordnet ist, der auf dem Mast oder ähnlichem aufgesteckt ist und dazu dient, mit dem an der Spitze des Mastes angebrachten Haken zusammenzuwirken.

5. Vorrichtung nach Anspruch 1 oder 3, gekennzeichnet durch:

— einen Karabinerhaken (17), der an der Segelspitze (10, 1) befestigt ist,

— einen Führungswagen oder -schlitten (41), der mit mindestens einem Liektunnel (16) des Mastes zusammenwirkt,

— ein elastisch deformierbares Verbindungsorgan (43), das zwischen dem Wagen und dem Karabinerhaken angeordnet ist und die Halterung des Karabinerhakens sicherstellt, damit dessen Ebene senkrecht zu der Ebene des Segels steht und in Richtung auf die Mastspitze (35) geneigt,

— einen Verankerungshaken (37), der komplementär zum Karabinerhaken ist und an der Mastspitze vorgesehen ist.

6. Vorrichtung nach Anspruch 5, dadurch gekennzeichnet, dass sie ein an der Segelspitze (10, 1) angeordnetes Organ zum Eingreifen in den Haken zum Hissen des Segels aufweist, der an der Segelspitze angeordnet und mit einem Rückholseil verbunden ist.

7. Vorrichtung nach Anspruch 5, dadurch gekennzeichnet, dass das deformierbare Organ (43) eine gefaltete Blattfeder ist, deren Ebene senkrecht zur Segelebene verläuft.

8. Vorrichtung nach Anspruch 5 oder 7, dadurch gekennzeichnet, dass das elastisch deformierbare Verbindungsorgan (43) mit Organen (45, 46) verbunden ist, die dessen Verformung begrenzen.

9. Vorrichtung nach Anspruch 5, dadurch gekennzeichnet, dass der Wagen (41) eine Länge aufweist, die so gewählt ist, dass sie gegen das Endgestell (35) anschlägt und den Hub beim Hissen des Segels begrenzt.

10. Vorrichtung nach Anspruch 5, dadurch gekennzeichnet, dass der Wagen (41) an dem Liekseil des Segels befestigt ist, um mit letzterem zusammenzuwirken, wenn dieser gegen den Verankerungshaken anschlägt.

11. Vorrichtung nach Anspruch 5 oder 9, dadurch gekennzeichnet, dass der Wagen (41) von dem Segel getragen wird.

12. Vorrichtung nach Anspruch 5, dadurch gekennzeichnet, dass der Verankerungshaken (37) von seiner Basis aus eine geneigte Rampe (38) zur Längsführung der Gabel (22) des festen Flügels des Karabinerhakens bildet zum Aufspringen des Karabinerhakens entgegen der Einwirkung des elastisch deformierbaren Verbindungsorgans.

**Claims**

1. Safety device for fastening the head of a sail to a masthead, of the type comprising a snap shackle (17) the opening of which is controlled under load and which has an opening-release catch (26) with elastic return means and a swivel hook (19) for attachment to the head of the sail (1), characterized in that it comprises:

— a member (28) for remotely-controlling the triggering of the release catch, mounted for sliding along the sail (1),

— a gripping member (30) fixed on the end of said control member and disposed, when not in use, inside a protective pocket (31) formed on the sail.

2. Device according to claim 1, characterized in that the control member (28) is a cable or cord sliding inside a hem (29) provided on the sail (1) substantially parallel to the bolt rope.

3. Device according to claim 1, characterized in that it comprises a snap shackle (17) comprising, on the one hand, a fixed arm (21) the end of which forms a fork (22) offset with respect to the longitudinal axis (P) of the snap shackle traversing the pin (19a) of the swivel hook (19) and, on the other hand, a curved movable arm (24), articulated on said fork and of which the free end portion, designed to cooperate with a fastening projection (25) is complementary to the catch (26) for spontaneous opening release under load.

4. Device according to claim 1 or 3, characterized in that it comprises a snap shackle (17) interposed between the head (10) of the sail (1) and a slide-block (9) slipped over the mast or similar and designed to cooperate with a hook provided at the head of the mast.

5. Device according to claim 1 or 3, characterized in that it comprises:

— a snap shackle (17) attached to the head (10) of the sail (1),

— a guiding slide or block (41) which is slidable and cooperates with at least one bolt rope groove (15) of the mast,

— an elastically deformable connecting member (43) interposed between the guiding slide and the snap shackle and holding said snap shackle so that its plane is placed perpendicularly to the plane of the sail while being inclined in the direction of the masthead (35),

— a projection (37) complimentary of the snap shackle and provided at the top of the mast.

6. Device according to claim 5, characterized in that it comprises means (44) provided in the head (10) of the sail (1) for engaging a hoisting hook mounted on the end of a halyard and operationally coupled to a return cord.

7. Device according to claim 5, characterized in that the deformable member (43) is a bent-over leafspring the plane of which is perpendicular to the plane or the sail.

8. Device according to claim 5 or 7, characterized in that the elastically deformable connection member (43) is operationally coupled with means (45, 46) for limiting its deformation.

9. Device according to claim 5, characterized in that the length of the guiding-slide (41) is selected so as to cooperate in positive abutment against the headpiece (35) and to limit the sail hoisting stroke.

10. Device according to claim 5, characterized in that the guiding-slide (41) is connected to the bolt rope of the sail in order to cooperate with the latter when it is in abutment on the fastening lug.

11. Device according to claim 5 or 9, characterized in that the guiding-slide (41) is borne by the sail.

12. Device according to claim 5, characterized in that the fastening lug (37) forms, from its base, an inclined ramp (38) for laterally guiding the fork (22) of the fixed arm (21) of the snap shackle and for pivoting open the plane of said snap shackle against the action of the elastically deformable connection member.

Fig.1

Fig.1a

Fig. 2

Fig. 3

Fig. 4

Fig.6

Fig.7

Fig.5

Fig. 8

Fig. 9

Fiq_10

42

41

42

47

10

48

14

Fiq_11

43

10

49b

51

32

49a

42

50

14

42

10

41

49a

49b

42b

50

42a

14  15

3

Fiq_12